# EUROPEAN PATENT APPLICATION

(11) **EP 2 042 586 A1**
(43) Date of publication of application: **01.04.2009**
(21) Application number: 07790557.8
(22) Date of filing: 10.07.2007
(51) Int. Cl.: C10M 169/00, F16D 3/20, C10M 107/02, C10M 107/08, C10M 115/08, C10M 125/22, C10M 133/16, C10M 135/18, C10M 137/10, C10N 10/04, C10N 10/12, C10N 30/00, C10N 30/06, C10N 30/08, C10N 40/04, C10N 50/10

(54) **GREASE COMPOSITION FOR CONSTANT VELOCITY JOINT AND CONSTANT VELOCITY JOINT**

(30) Priority: 10.07.2006 JP 2006189592
(71) Applicant: Kyodo Yushi Co., Ltd., Kanagawa 251-8588 (JP); NTN Corporation, Osaka-shi, Osaka 550-0003 (JP)
(72) Inventor: KAKIZAKI, Mitsuhiro, Kanagawa 251-8588 (JP); KONDO, Shinya, Kanagawa 251-8588 (JP); ISHIJIMA, Minoru, Shizuoka 438-8510 (JP); YAMAZAKI, Kenta, Shizuoka 438-8510 (JP)
(74) Representative: Vossius & Partner
(86) International application number: PCT/JP2007/063739
(87) International publication number: WO 2008/007671

(57) **Abstract**

The invention provides a grease composition for constant velocity joints and constant velocity joints in which the grease composition is packed. The composition comprises (a) a base oil comprising a synthetic oil; (b) a thickening agent; (c) a molybdenum sulfurized dialkyl dithiocarbamate; (d) a thiophosphate; and (e) a zinc sulfurized dialkyl dithiocarbamate. The composition can reduce low temperature rotational torque and folding torque in constant velocity joints while inhibiting deterioration of a boot material comprising a silicone rubber.

## Description

### Field of the invention

This invention relates to a grease composition for constant velocity joints, which reduces low temperature rotational torque and folding torque in constant velocity joints and constant velocity joints in which the grease composition is packed, more specifically, a grease composition for constant velocity joints, which reduces low temperature start-up rotational torque and stick-slip in constant velocity joints and which is compatible with a boot material comprising silicone rubber (silicone resin) and constant velocity joints in which the grease composition is packed.

### Background art

In the field of automobile industry, FF-car production has recently been increasing for the purpose of reducing weight and expanding living space. 4WD car production is also growing due to their functionality. These FF and 4WD cars realize a power transmission and steering by the front wheels, and therefore, it is necessary to secure a smooth power transmission, even when the steering wheel is fully turned, and the constant velocity joint is inevitable as a part to transmit a rotational movement at a constant velocity in response to the changes in crossing angles between the crossing two axes.
Because performance of cars has recently been improved further and the production of high-power cars is increasing, constant velocity joints are exposed to greater stresses and severer lubrication condition.
Meanwhile, there is a tendency that an improvement of riding comfort in a car is also required at a higher level. The improvement of the riding comfort is demanded in any climate regions, for example, from extremely hot regions to extremely cold regions.

In particular, smooth motion of constant velocity joints in extremely cold regions is emphasized. In extremely cold regions, cars may be started at an extremely low temperature. Under such a condition, the rotational resistance may vary upon rotating due to the difference in frictional resistances among parts composing the constant velocity joint. Variation in rotational resistance may lead to deteriorate the riding comfort. Thus, troubles unexpected under normal circumstances may occur in extremely cold regions. To avoid troubles in constant velocity joints in extremely cold regions, it is important to reduce low temperature torque and folding torque. The folding torque has a tendency to depend on friction coefficient (resistance) of a grease and therefore, there is a need for early development of a grease which exerts excellent effects at low temperature. However, there have not been proposed any grease compositions for constant velocity joints which can sufficiently reduce low temperature rotational torque and folding torque in extremely cold regions.
There have been proposed grease compositions for constant velocity joints, which comprise a base oil as a lubricant, a diurea type thickening agent, and molybdenum compounds as additives (see, for example, Patent Documents 1-3, 5, and 6). Rotational resistance of constant velocity universal joints used in cars is greatly influenced by hardness of a boot in addition to internal resistance of the constant velocity universal joints. In particular, at a low temperature, start-up torque and rotational resistance increase which leads to deterioration of operation performance such as steering. To reduce rotational resistance of constant velocity universal joints, there have been proposed constant velocity universal joints equipped with a boot to inhibit grease leak from the joints or entry of contamination into the joints, wherein the boot is made of silicone rubber material which has a JIS K 6253 durometer hardness A of not higher than 55 at a normal temperature (25°C) and not higher than 85 at a low temperature (-40°C) (see, for example, Patent Document 4).
However, when various factors overlap at extremely low temperature, these grease compositions for constant velocity joints may be insufficient in properties to reduce low temperature rotational torque and folding torque. Accordingly, there is a need for further improved stable performance. Moreover, if a silicone rubber is used as a boot material, it is required for the boot material to have oil resistance, flex resistance, water resistance, weather resistance, heat resistance, cold resistance and the like. However, there have not been proposed any grease compositions which will increase lifetime of silicone rubber boot material.

Patent Document 1 JP-A-10-273692
Patent Document 2 JP-A-2001-11481
Patent Document 3 JP-A-2003-165988
Patent Document 4 JP-A-2005-214395
Patent Document 5 JP-A-2005-226038
Patent Document 6 JP-A-2006-16481

### [Disclosure of the invention]

### [Problems to be solved by the invention]

An object of the present invention is to provide a grease composition for constant velocity joints, which reduces low temperature rotational torque and folding torque in constant velocity joints, and is compatible with a boot material comprising a silicone rubber.
Another object of the present invention is to provide a constant velocity joint in which the above grease composition is packed.

### Means for solving the problems

The inventors of this invention have conducted studies to solve the above problems and found that a grease composition comprising specific components can reduce low temperature rotational torque and folding torque in constant velocity joints while inhibiting deterioration of a boot material comprising a silicone rubber. The grease composition for constant velocity joints of the present invention has been completed based on this finding.

The present invention provides the following grease composition for constant velocity joints and constant velocity joints.
1. A grease composition for constant velocity joints, which comprises the following components (a) to (e):
   (a) a base oil comprising a synthetic oil;
   (b) a thickening agent;
   (c) a molybdenum sulfurized dialkyl dithiocarbamate;
   (d) a thiophosphate; and
   (e) a zinc sulfurized dialkyl dithiocarbamate.
2. The grease composition for constant velocity joints of the above item 1, wherein the composition further comprises (f) a mixture of 30-70% by mass of molybdenum disulfide and 70-30% by mass of a fatty acid amide.
3. The grease composition for constant velocity joints of the above item 1 or 2, wherein the synthetic oil in Component (a) is a synthetic hydrocarbon oil.
4. The grease composition for constant velocity joints of any one of the above items 1 to 3, wherein Component (b): the thickening agent is a urea compound.
5. The grease composition for constant velocity joints of any one of the above items 1 to 4, wherein the content of Component (c): the molybdenum sulfurized dialkyl dithiocarbamate is 0.1 to 10% by mass based on the total mass of the grease composition.
6. The grease composition for constant velocity joints of any one of the above items 1 to 5, wherein the content of Component (d): the thiophosphate is 0.1 to 10% by mass based on the total mass of the grease composition.
7. The grease composition for constant velocity joints of any one of the above items 1 to 6, wherein the content of Component (e): the zinc sulfurized dialkyl dithiocarbamate is 0.1 to 10% by mass based on the total mass of the grease composition.
8. The grease composition for constant velocity joints of any one of the above items 2 to 7, wherein the content of Component (f): the mixture of 30-70% by mass of molybdenum disulfide and 70-30% by mass of a fatty acid amide is 0.1 to 10% by mass based on the total mass of the grease composition.
9. A constant velocity joint in which the grease composition of any one of the above items 1 to 8 is packed.

### [Effects of the invention]

The grease composition for constant velocity joints of the present invention can reduce low temperature rotational torque and folding torque in constant velocity joints and start a car even under extremely low temperature conditions so that it is possible to avoid troubles in constant velocity joints in extremely cold areas.
In addition, the grease composition for constant velocity joints of the present invention can inhibit deterioration of a boot material comprising a silicone rubber and make the life of the boot material longer.

### [Best modes for carrying out the invention]

The present invention will hereafter be described more in detail.
The grease composition for constant velocity joints of the present invention is characterized in that it comprises the above mentioned components (a) to (e). Preferred embodiment of the present invention further comprises the component (f). Each of the components will be described.

Component (a): a base oil comprising a synthetic oil used in the invention may be one synthetic oil alone, or a mixture of two or more synthetic oils, or a mixture of a synthetic oil and a mineral oil. Examples of synthetic oils include ester synthetic oils such as polyol ethers, synthetic hydrocarbon oils such as poly-alpha-olefin and polybutene, ether synthetic oils such as alkyldiphenyl ethers and polypropylene glycol, silicone oils, fluorinated oils and the like. Among them, synthetic hydrocarbon oils are preferred. The content of synthetic oils in the base oil is preferably at least 40% by mass, and more preferably at least 60% by mass based on the total mass of the base oil.

Examples of Component (b): a thickening agent used in the present invention include a diurea thickening agent of the following formula (1):

R¹NH-CO-NH-C₆H₄-P-CH₂-C₆H₄-p-NH-CO-NHR² (1)

wherein R¹ and R² may be same or different and represent alkyl groups having 8-20 carbon atoms, preferably 8-18 carbon atoms, aryl groups having 6-12 carbon atoms, preferably 6-7 carbon atoms, or cycloalkyl groups having 6-12 carbon atoms, preferably 6-7 carbon atoms.

The diurea thickening agents may be prepared by, for example, reacting a desired diisocyanate and a desired monoamine. Preferred specific example of diisocyanate is diphenylmethane-4,4'-diisocyanate. Examples of monoamines include aliphatic amines, aromatic amines, cycloaliphatic amines and mixtures thereof. Specific examples of aliphatic amines include octylamine, dodecylamine, hexadecylamine, octadecylamine and oleylamine. Specific examples of aromatic amines include aniline and p-toluidine. Specific example of cycloaliphatic amine is cyclohexylamine.
Among them, preferred are diurea thickening agents prepared by the use of octylamine, octadecylamine, cyclohexylamine or a mixture thereof as a monoamine.

The content of Component (b): a thickening agent is one necessary for a desired consistency and typically, it is preferably 1-20% by mass, more preferably 2-20% by mass based on the total mass of the grease composition.

Specific examples of Component (c): a molybdenum sulfurized dialkyl dithiocarbamate used in the present invention are represented by the following formula (2):

[R³ R⁴ N-CS-S]₂-Mo₂ Oₘ Sₙ (2)

wherein R³ and R⁴ independently represent alkyl groups having 1-24, preferably 2-18 carbon atoms, m is 0 to 3, n is 1 to 4 and m + n is 4.

The content of Component (c): a molybdenum sulfurized dialkyl dithiocarbamate is preferably 0.1-10% by mass, more preferably 0.5-5% by mass based on the total mass of the grease composition.

Specific examples of Component (d): a thiophosphate used in the present invention are represented by the following formula (3):

(R⁵O)(R⁶O)P=S(OR⁷) (3)

wherein R⁵ is alkyl group having 1-24 carbon atoms, cycloalkyl group having 5-14 carbon atoms, alkylcycloalkyl group having 5-14 carbon atoms, aryl group having 6-24 carbon atoms, alkylaryl group having 7-24 carbon atoms, or arylalkyl group having 7-24 carbon atoms, R⁶ and R⁷ are hydrogen atoms, alkyl groups having 1-24 carbon atoms, cycloalkyl groups having 5-24 carbon atoms, alkylcycloalkyl groups having 5-24 carbon atoms, aryl groups having 6-24 carbon atoms, alkylaryl groups having 7-24 carbon atoms, or arylalkyl groups having 7-24 carbon atoms.

Preferred are thiophosphates of the formula wherein R⁵, R⁶ and R⁷ are alkyl groups having 8-18 carbon atoms, or alkylaryl groups having 7-24 carbon atoms, and particularly preferred are trialkylphenyl thiophosphates of the formula wherein R⁵, R⁶ and R⁷ are alkylphenyl groups having 8-24 carbon atoms,

The content of Component (d): a thiophosphate is preferably 0.1-10% by mass, more preferably 1-8% by mass, most preferably 2-6% by mass based on the total mass of the grease composition.

Specific examples of Component (e): a zinc sulfurized dialkyl dithiocarbamate used in the present invention are represented by the following formula (4):

(R⁸-CS-S)₂Zn (4)

wherein R⁸ represents alkyl group having 1-18 carbon atoms, preferably 1-5 carbon atoms.

Component (f) used in the present invention is a mixture of 30-70% by mass of molybdenum disulfide and 70-30% by mass of a fatty acid amide. Specific examples of fatty acid amides used in Component (f) include monoamides of the formula (5) and bisamides of the formula (6):

R⁹-CO-NH₂ (5)

R¹⁰-CONH-R¹¹-NHCO-R¹² (6)

wherein R⁹, R¹⁰ and R¹² may be same or different and represent alkyl groups having 1-24 carbon atoms, preferably 8-18 carbon atoms and R¹¹ represents alkylene group having 2-8 carbon atoms.

Among them, preferred are palmitic acid amide and stearic acid amide, and particularly preferred is stearic acid amide.

Molybdenum disulfide used in Component (f) of the present invention has been widely used in constant velocity joints as a solid lubricant. It is known as a lubricating mechanism that molybdenum disulfide has a layered lattice structure and is easily sheared into thin layered shapes by sliding motion to reduce friction resistance. It is also effective to inhibit seizing of constant velocity joints.
The content of Component (f) is preferably 0.1-10% by mass, more preferably 0.5-5% by mass based on the total mass of the grease composition.

The grease composition of the present invention may comprise in addition to the above components, conventional additives usually used in grease compositions such as other extreme pressure agents, antioxidants, antirust agents, and anticorrosives.

Examples of constant velocity joints of the present invention of which torque transmission element is spherical body include fixed type constant velocity joints such as Rzeppa type and Birfield type, and slide type constant velocity joints such as double offset type and cross groove type. These joints use balls as torque transmission elements which are placed on a track formed between an outer race and an inner race of the constant velocity joints and are fit through a cage into the groove.

Examples of fixed type constant velocity joints of the present invention include Rzeppa type and Birfield type mentioned above which can be operated at large angles of 45 degree or more.

Examples of slide type constant velocity joints of the present invention include double offset type and cross groove type mentioned above which can not be operated at large angles comparable to fixed type constant velocity joints but can be slid in the direction of drive axels.

The present invention will be explained with reference to the following Examples.

### [Examples]

### [Examples 1-5 and Comparative Examples 1-8]

### Preparation of grease compositions

A base oil (460 g) and diphenylmethane-4,4'-diisocyanate (38.7 g) were mixed in a first container and heated to 70-80°C(degrees C). A base oil (460 g), cyclohexylamine (24.6 g) and octadecylamine (16.7 g) were mixed in a second container and heated to 70-80°C. The mixture was added to the first container and reacted for 30 minutes under sufficient stirring. Then, the mixture was heated to 160°C. and allowed to cool to obtain a base urea grease. To the base grease, additives and a base oil were added in amounts specified in Tables 1 and 2 and the mixtures were kneaded by a three roll mill to adjust worked penetration to No. 1 grade.

### Evaluation

The inventors have found that folding torque correlates with friction coefficient measured by TE-77 friction coefficient tester and low temperature torque correlates with data measured by low temperature torque test (JIS K 2220) and therefore, they were evaluated by the data measured by the tester and the test.
Friction resistance
   passed ○; less than 0.050 of friction coefficient by TE-77 test
   failed ×: not less than 0.050 of friction coefficient by TE-77 test
Low temperature property
   passed ○: not higher than 600mNm of torque at -40°C
   failed ×: higher than 600mNm of torque at -40°C

### Compatibility with silicone rubber boot material

According to JIS K 6258 (Method for judgment of liquid resistance for vulcanized rubber and thermoplastic rubber) and JIS K 6251 (Method for judgment of properties for vulcanized rubber and thermoplastic rubber), change in tensile strength (%)(change in TB at 150°C for 72 hours) was evaluated.

### Compatibility with silicone rubber boot material

passed ○: higher than -20% of TB change
failed x: not higher than -20% of TB change

**[Table 1]**

| Example | | 1 | 2 | 3 | 4 | 5 |
|---|---|---|---|---|---|---|
| (a) | Synthetic oil^{* 1} | 36.4 | 36.4 | 36.4 | 35.6 | 53.4 |
| | Mineral oil | 54.6 | 53.6 | 53.6 | 53.4 | 35.6 |
| (b) | Diurea | 5 | 5 | 5 | 5 | 5 |
| (c) | ^{*2} MoDTC ^{*2} | 2 | 2 | 2 | 2 | 2 |
| (d) | thiophosphate ^{*3} | 1 | 1 | 1 | 1 | 1 |
| (e) | ZnDTC ^{*4} | 1 | 1 | 1 | 1 | 1 |
| (f) | MoS₂ ^{*5} | - | 1 | - | 1 | 1 |
| | Fatty acid amide ^{*6} | - | - | 1 | 1 | 1 |
| (g) | ZnDTP^{*7} | - | - | - | - | - |
| Friction coefficient by TE-77 test | | 0.044 | 0.044 | 0.044 | 0.040 | 0.040 |
| Low temperature torque (rotation) | | 230 | 230 | 230 | 220 | 160 |
| Silicone rubber material immersion test | | -4 | -5 | -5 | -4 | -4 |
| 1) Friction coefficient | | ○ | ○ | ○ | ○ | ○ |
| 2) Low temperature property | | ○ | ○ | ○ | ○ | ○ |
| 3) Silicone rubber boot material compatibility | | ○ | ○ | ○ | ○ | ○ |

**[Table 2]**

| Comparative Example | | 1 | 2 | 3 | 4 | 5 | 6 | 7 | 8 |
|---|---|---|---|---|---|---|---|---|---|
| (a) | Synthetic oil ¹ | - | 37.2 | 36.4 | 36.0 | 36.8 | 36.8 | 36.4 | 36.0 |
| | Mineral oil | 89.0 | 55.8 | 54.6 | 54.0 | 55.2 | 55.2 | 54.6 | 54.0 |
| (b) | Diurea | 5 | 5 | 5 | 5 | 5 | 5 | 5 | 5 |
| (c) | MoDTC ^{*2} | 2 | 2 | - | 2 | 2 | 2 | 2 | 2 |
| (d) | thiophosphate ^{*3} | 1 | - | 1 | - | 1 | - | - | - |
| (e) | ZnDTC ^{*4} | 1 | - | 1 | 1 | - | 1 | - | - |
| (f) | MoS₂ ^{*5} | 1 | - | 1 | 1 | - | - | 1 | 1 |
| | Fatty acid amide ^{*6} | 1 | - | 1 | 1 | - | - | 1 | 1 |
| (g) | ZnDTP^{*7} | - | - | - | - | - | - | - | 1 |
| Friction coefficient by TE-77 test | | 0.043 | 0.066 | 0.096 | 0.054 | 0.053 | 0.061 | 0.063 | 0.052 |
| Low temperature torque (rotation) | | 900 | 230 | 230 | 230 | 230 | 230 | 230 | 230 |
| Silicone rubber material immersion test | | -12 | -4 | -4 | -5 | -5 | -4 | -5 | -80 |
| 1) Friction coefficient | | ○ | × | × | × | × | × | × | × |
| 2) Low temperature property | | × | ○ | ○ | ○ | ○ | ○ | ○ | ○ |
| 3) Silicone rubber boot material compatibility | | ○ | ○ | ○ | ○ | ○ | ○ | ○ | × |

| | | | | | | | | | |
|---|---|---|---|---|---|---|---|---|---|
| *1:Synthetic oil (poly-alpha-olefin: kinematic viscosity at 100°C is 10 mm²/s) *2:Molybdenum sulfurized dialkyl dithiocarbamate *3:Trialkylphneyl thiophosphate *4:Zinc sulfurized dialkyl dithiocarbamate *5:Molybdenum disulfide *6:Stearic acid amide *7: Zinc dithiophosphate | | | | | | | | | |

### Results

The above results show that the grease composition for constant velocity joints of Examples 1-5 of the present invention comprising Components (a) to (e) are superior to those of Comparative Examples 1-8 wherein any one or more of Components (a), (c) to (e) is not included in low temperature torque and folding torque and also in compatibility with a silicone rubber boot material.
The grease compositions of Examples 4 and 5 which comprise both molybdenum disulfide and stearic acid amide show lower folding torque than those of Examples 2 and 3 which comprises one of them. The grease composition of Example 5 which comprises the synthetic oil in a higher ratio is much lower in low temperature rotational torque.
In contrast, the grease composition of Comparative Example 1 which does not comprise Component (a) (a synthetic oil) is high in low temperature rotational torque, the grease composition of Comparative Example 2 which does not comprise Components (d) and (e), and that of Comparative Example 3 which does not comprise Component (c) are high in folding torque, those of Comparative Examples 4 to 8 which do not comprise Components (d) and/or (e) are high in folding torque, and that of Comparative Example 8 which comprises Component (g) (zinc dithiophosphate) is low in compatibility with a silicone rubber boot material.

## Claims

1. A grease composition for constant velocity joints, which comprises the following components (a) to (e):
(a) a base oil comprising a synthetic oil;
(b) a thickening agent;
(c) a molybdenum sulfurized dialkyl dithiocarbamate;
(d) a thiophosphate; and
(e) a zinc sulfurized dialkyl dithiocarbamate.

2. The grease composition for constant velocity joints of claim 1, wherein the composition further comprises (f) a mixture of 30-70% by mass of molybdenum disulfide and 70-30% by mass of a fatty acid amide.

3. The grease composition for constant velocity joints of claim 1 or 2, wherein the synthetic oil in Component (a) is a synthetic hydrocarbon oil.

4. The grease composition for constant velocity joints of any one of claims 1 to 3, wherein Component (b): the thickening agent is a urea compound.

5. The grease composition for constant velocity joints of any one of claims 1 to 4, wherein the content of Component (c): the molybdenum sulfurized dialkyl dithiocarbamate is 0.1 to 10% by mass based on the total mass of the grease composition.

6. The grease composition for constant velocity joints of any one of claims 1 to 5, wherein the content of Component (d): the thiophosphate is 0.1 to 10% by mass based on the total mass of the grease composition.

7. The grease composition for constant velocity joints of any one of claims 1 to 6, wherein the content of Component (e): the zinc sulfurized dialkyl dithiocarbamate is 0.1 to 10% by mass based on the total mass of the grease composition.

8. The grease composition for constant velocity joints of any one of claims 2 to 7, wherein the content of Component (f): the mixture of 30-70% by mass of molybdenum disulfide and 70-30% by mass of a fatty acid amide is 0.1 to 10% by mass based on the total mass of the grease composition.

9. A constant velocity joint in which the grease composition of any one of claims 1 to 8 is packed.
